# EUROPÄISCHE PATENTANMELDUNG

(11) **EP 3 505 845 A1**
(43) Veröffentlichungstag der Anmeldung: **03.07.2019**
(21) Anmeldenummer: 18020655.9
(22) Anmeldetag: 23.12.2018
(51) Int. Cl.: F24T 10/17, F28F 13/06, F28F 21/06, F28F 1/36

(54) **ERDWÄRMESONDE IN FORM EINER KOAXIALSONDE MIT DOPPELROHR-SCHLAUCH UND HERSTELLUNGSVERFAHREN HIERFÜR**

(30) Priorität: 28.12.2017 DE 102017012049
(71) Anmelder: TR Plast GmbH, 92318 Neumarkt (DE)
(72) Erfinder: Seel, Wolfgang, D-90419 Nürnberg (DE)
(74) Vertreter: Dreykorn-Lindner, Werner

(57) **Zusammenfassung**

2.1 Um eine Koaxial-Erdwärmesonde derart auszugestalten, dass ein Doppelrohrschlauch vor dem Einbringen in das Erdreich nicht vormontiert, sondern nur auf die gewünschte Länge abgeschnitten werden muss, dass ein verbesserter Wirkungsgrad der Erdwärmesonde erreicht wird und dass diese endlos vorfertigbar ist, sind bei der erfindungsgemäßen Koaxial-Erdwärmesonde das Innenrohr (I) an das Außenrohr (A) durch Extrudieren von Kunststoff angeformt und biegeelastisch. Das Innenrohr (I) erstreckt sich über die gesamte Länge innerhalb des Außenrohrs (A) und die Querschnittsflächen von Innenrohr (I) zu Außenrohr (A) liegen im Verhältnis von 1:8 bis 1:12. Der in endloser Vorfertigung vorgefertigte Doppelrohrschlauch, besteht somit aus dem Innenrohr (I) mit einer angeformten Helix (H), welches an das Außenrohr (A) angeformt ist, und kann erst vor Einbringen in das Erdreich auf die erforderliche Länge zugeschnitten und mit dem Verschluss (V) versehen werden.

Das Verfahren zur Herstellung ist dadurch gekennzeichnet, dass das Innenrohr (I) mit angeformter Helix (H) aus geschlossenzelligem schaumförmigem Elastomer oder weitgehend geschlossenporigem und elastischem Schaumstoff mit verdichteter oder geschlossener Oberfläche als thermische Isolierung (TI) vorgefertigt und im nachfolgenden Prozessschritt beim Extrudieren des Außenrohrs (A) das Innenrohr (I) eingelegt wird.
2.2 Die Erfindung liegt auf dem Gebiet der Erdwärmesonden.

## Beschreibung

Die Erfindung betrifft eine Erdwärmesonde in Form einer Koaxialsonde mit Doppelrohr-Schlauch gemäß dem Oberbegriff des Patentanspruchs 1. Weiterhin betrifft die Erfindung, gemäß Patentanspruch 7, ein Herstellungsverfahren für eine Erdwärmesonde nach Patentanspruch 1.

Erdwärmesonden in Form eines geschlossenes, mit einer zirkulierenden Wärmeträgerflüssigkeit befüllten U-förmigen Rohrsystems, welches in der Regel in ein vertikal angeordnetes Bohrloch in den Untergrund eingebaut ist, sind seit langem bekannt. Mit der Erdwärmesonde wird aus dem Erdreich Wärme entzogen, die meist an den Wärmetauscher (Verdampfer) einer Erdwärmepumpe weitergegeben wird. Üblicherweise besteht die Erdwärmesonde aus Polyethylen-Kunststoffrohren, die bei U-Sonden (oder Doppel-U-Sonden, wenn zwei Rohrpaare pro Bohrloch verwendet werden) am jeweils unteren Ende mit einem U-förmigen Fußteil verbunden sind. Daneben werden auch koaxiale Sonden eingesetzt, bei denen Vor- und Rücklauf bzw. Auf- und Abstieg der Wärmeträgerflüssigkeit (meist ein Gemisch aus Wasser und Frostschutzmittel) im Innenrohr und im Ringraum zwischen innerem und äußerem Rohr der Koaxialsonde erfolgen. Beim Einbau der Erdwärmesonden wird der verbleibende Resthohlraum des Bohrloches mit einem Füllmaterial mit einer guten Wärmeleitfähigkeit über die während der Bohrung eingebaute Verrohrung von unten nach oben verpresst. Durch das abbindende Füllmaterial wird eine gute Wärmeübertragung vom umgebenden Erdreich zu den Sondenrohren erreicht und ein Austreten der Wärmeträgerflüssigkeit in das Grundwasser wird verhindert. Die Sonden-Vorläufe und Sonden-Rückläufe sind durch frostsicher verlegte, horizontale Anschlussleitungen mit der Wärmepumpe verbunden. Im Betrieb wird mittels einer Umwälzpumpe, die in einem geschlossenen Kreislauf befindliche Wärmeträgerflüssigkeit durch die Erdwärmesonde gepumpt und auf ihrem Weg zur tiefsten Stelle und zurück durch die Erdwärme über die Wandung erwärmt. Somit bildet die Erdwärmesonde einen großflächigen Wärmeaustauscher aus. Die erwärmte Wärmeträgerflüssigkeit strömt in einen Wärmetauscher der Wärmepumpe, um ihr durch Verdampfungskühlung die enthaltene Wärme zu entziehen. Die nachgeschaltete Wärmepumpe dient zur Anhebung auf das für die Heizung erforderliche Temperaturniveau. Je größer die Temperaturdifferenz zwischen der Erdtemperatur und der gewünschten Heizmedientemperatur ist, desto mehr mechanische Pumpenergie ist notwendig. Ab einer Tiefe von ungefähr 10 Metern bleibt die Temperatur über das Jahr praktisch unverändert und beträgt in Mitteleuropa um 11 °C und nimmt im Durchschnitt alle 30 Meter Tiefe um 1 °C zu, wobei der Wärmestrom bei ca. 0,06 Watt/m² liegt.

Bei koaxialen Sonden ist in der Regel das Fluid in einem koaxialen Rohr eingeschlossen. Im Ringraum der Bohrung fließt die kalte Wärmeträgerflüssigkeit nach unten, um anschließend in der dünneren eingehängten Steigleitung erwärmt wieder aufzusteigen. Um eine verbesserte Koaxialsonde bereitzustellen, die einen hohen Wärmeübergang aufweist, ist es aus der DE 20 2004 007 567 U1 bekannt, das Außenrohr zumindest über einen Großteil seiner Längsausdehnung als Wellrohr auszubilden. In seinem gewellten Bereich besteht das Außenrohr aus Kunststoff, beispielsweise Polyäthylen oder Polypropylen und die Wandstärke beträgt in seinem gewellten Bereich hierbei vorzugsweise höchstens 5mm. Für Wellrohre mit Durchmessern von höchstens 100mm ist ein Wert von höchstens 3mm besonders bevorzugt, so dass eine zusammenrollbare Ausbildung des Außenrohrs erreicht wird. Die Wellungen des Außenrohrs sind sinusförmig, trapezförmig, rechteckförmig, dreieckförmig oder in Form von aufeinanderfolgenden Halbkreisen oder in Form einer Kombination hiervon ausgebildet. Da auf das Innenrohr nur wesentlich kleinere Belastungen als auf das Außenrohr wirken, kann dieses auch ohne Wellung mit einer entsprechend geringen Wandstärke bzw. entsprechend flexibel ausgebildet werden, sodass es zusammenrollbar ist. Im oberen Abschnitt des Innenrohres ist dieses mit einer Wärmedämmung versehen, um Wärmeverluste des innerhalb des Innenrohres hinausströmenden Wärmeträgermediums zu verringern. Das Innenrohr endet vorzugsweise in einem Abstand von weniger als 1 m vom unteren Ende des Außenrohrs. Alternativ erstreckt sich das Innenrohr bis zum unteren Ende des Außenrohrs und weist in seinem unteren Endbereich Öffnungen zum Durchtritt des Wärmeträgermediums auf. Zur Definition der Lage des Innenrohrs im Außenrohr dienen Abstandhalter. Um die Erdwärmesonde/ koaxiale Sonde im Bohrloch möglichst zu zentrieren bzw. um Beschädigungen beim Einbringen zu vermeiden, ist das Außenrohr an der Außenseite mit Abstandhaltern versehen, die auch die Funktion von Führungs- und Gleitelementen haben. Durch die Wellung des Außenrohrs wird die Formsteifigkeit der Rohrwandung erhöht. Dies ermöglicht es, die Wandstärke vergleichsweise gering zu halten. Im Weiteren wird durch die Wellung des Außenrohres die Oberfläche vergrößert. Die geringere Wandstärke und die größere Oberfläche bewirken beide verbesserte Werte für den Wärmedurchgang und Wärmeübergang.

Um eine Koaxial-Erdwärmesonde mit einem vor Ort einfach montierbaren Sondenanschlusskopf zu schaffen, der einen dichten Abschluss der Koaxial-Erdwärmesonde mit einer langen Nutzungsdauer gewährleistet, besteht der Anschlusskopf gemäß der DE 20 2010 010 096 U1 aus einem Grundkörper, der sowohl das Innenrohr als auch das Außenrohr umschließt. Der Grundkörper ist mit einer in unterschiedlichen Durchmessern gestuften Bohrung mit Anschlägen zur Abstützung auf dem Ende sowohl des Außen- als auch des Innenrohres versehen, wobei das Außen- und das Innenrohr über ein Steck- und Klemmsystem mit dem Grundkörper verbunden sind. Das Steck- und Klemmsystem besteht aus einer mit dem Grundkörper verschraubbaren Schraub-Klemmverbindung, so dass das Außenrohr in axialer Richtung festgelegt ist. Die Schraub-Klemmverbindung umfasst weiterhin mindestens eine am Außenumfang des Außenrohres anliegende Dichtung, um eine Abdichtung der Koaxial-Erdwärmesonde nach außen zu gewährleisten. Der Verschluss der Erdwärmesonde, welcher den Sondenfuß bildet, ist am dem Anschlusskopf gegenüberliegenden Ende am Außenrohr befestigt und innen mit einer Abstützung für das Innenrohr versehen, die einen Überlauf des Fluides vom Außenrohr zum Innenrohr freihält. Um eine hohe Nutzungsdauer der Koaxial-Erdwärmesonde zu gewährleisten, ist der Verschluss mit dem Außenrohr verschweißt. Der Grundkörper ist weiterhin auf dem Außenrohr verdrehbar, so dass dessen Positionierung durch Drehen vor Ort ermöglicht wird, was eine einfache Endmontage der Koaxial-Erdwärmesonde erlaubt. Demgemäß wird es ermöglicht, den Anschlusskopf vor Ort, also nach dem Einbringen in eine Erdbohrung und nach einer exakten Längenanpassung sowohl des Außen- als auch des Innenrohres, zu montieren. Weiterhin kann der Grundkörper auch mit einem selbst dichtenden Steck-Klemmsystem zur Aufnahme der Vor- und Rücklaufleitungen ausgestattet sein.

Um eine Wärmetauschersonde bereit zu stellen, die bei baulich einfacher und kostengünstiger Ausführung eine Entnahme der im Erdreich vorhandenen Wärmeenergie mit hohem Wirkungsgrad, auch für Spitzenlasten, ermöglicht, ist es aus der DE 20 2011 102 165 U1 bekannt, den Ringraum zwischen Innenrohr und Außenrohr als Schichtenwärmespeicher mit einer, von unten kalt nach oben warm, ausgebildeten thermischen Zonierung auszubilden, welcher laminar durchströmt wird. Die thermische Zonierung des Wärmeträgermediums ist dabei als besonderer Vorteil derart ausgebildet, dass während des Betriebs der Sonde im Bereich des Sondenkopfes die wärmste Zone vorliegt, während im Bereich des Sondenfußes die kälteste Zone vorliegt. Zwischen der wärmsten und der kältesten Zone liegen laminar die Übergangszonen. Die Entnahme des Wärmeträgermediums aus der wärmsten Zone ermöglicht einen Wärmepumpenbetrieb mit einer hohen Leistungszahl. Durch die laminare Strömung bilden sich in dem Ringraum keine Verwirbelungen aus, welche die thermische Zonierung des Wärmeträgermediums negativ beeinflussen. Um dies zu erreichen, kann auch der Einlass des Innenrohres vorzugsweise so ausgebildet werden, dass dieser strömungsberuhigend auf das, in die Sonde, einströmende Wärmeträgermedium wirkt. Die thermische Zonierung wird im Betrieb in der Weise ausgebildet, dass am Einlass das von der Wärmepumpe abgekühlte Wärmeträgermedium mit der geringsten Temperatur und damit mit einer hohen Dichte vorliegt. Das Volumen des Ringraumes ist Teil des hydraulischen Kreislaufs der Wärmepumpe, so dass hier das Wärmeträgermedium von unten nach oben langsam nachgeführt wird. Durch die Temperaturdifferenz zu dem umgebenden Erdreich stellt sich ein Wärmestrom ein, der das Wärmeträgermedium langsam erwärmt und dem Erdreich Wärme entzieht. In Richtung Sondenkopf erhöht sich die Temperatur des Wärmeträgermediums und der Wärmestrom aus dem Erdreich verringert sich aufgrund der geringeren Temperaturdifferenz. Damit bildet sich der sogenannte Kältemantel im Erdreich der thermischen Zonierung der Sonde folgend ebenfalls thermisch zoniert aus und unterstützt so die thermische Zonierung im Ringraum der Sonde, indem der Wärmestrom aus dem Erdreich von unten nach oben mit ansteigenden Temperaturniveau erfolgt. Aufgrund der Wirkweise des Schichtspeichers wird im Teillastbetrieb, über den Auslass des Außenrohres, das Wärmeträgermedium stets im Zustand der maximalen Erwärmung abgegriffen und für den Wärmepumpenkreislauf verfügbar gemacht. Es stehen als besonderer Vorteil somit, gemittelt über die Zeit, höhere Vorlauftemperaturen für die Wärmepumpe zur Verfügung, als dies bei den bekannten Vorrichtungen der Fall ist, denn während der Betriebspause der Wärmepumpe wird der Wärmeentzug aus dem Erdreich in die Sonde fortgesetzt. Zum anderen wird durch die verhältnismäßig niedrige Strömungsgeschwindigkeit des Wärmeträgermediums in dem Ringraum eine Störung der thermischen Zonierung weitestgehend vermieden. Schließlich ist das Innenrohr gegenüber dem, sich zwischen Innen- und Außenrohr ausbildenden Ringraum, zumindest abschnittsweise mit einer thermischen Isolierung versehen.

Um eine Erdwärmesonde derart weiterzubilden, dass diese bei der vorgesehenen Einbautiefe auch dann dem Innendruck dauerhaft standhält, wenn kein oder kein ausreichender äußerer Gegendruck vorhanden ist, ist es aus der DE 20 2008 012 453 U1 bekannt, dass das Rohr mindestens abschnittsweise armiert ist. Der armierte Abschnitt des Rohres weist wenigstens eine Schicht auf, die Polyethylen oder Polypropylen (PP) oder Polybutylen (PB) oder Polyvinylchlorid (PVC) enthält. Es ist auch möglich, dass Copolymere oder Elends der genannten Polymere enthalten sind. Vorzugsweise enthält die Armierung Fasern, ausgewählt aus Kurzfasern, Langfasern oder Mischungen aus den vorgenannten, oder Faserbündel oder Fasergewebe oder Fäden oder Filamente oder textile Flächengebilde, wie Gewebe oder Gelege oder Gestricke oder Gewirke oder Vliese oder Mischformen der vorgenannten, oder parallele Fadenscharen. Alternativ kann die Armierung ein flächiges Metallgebilde aufweisen, das als Folie oder Folienstreifen vorliegt, wobei das Metallgebilde gegebenenfalls wenigstens abschnittsweise perforiert ist. Die Perforation ermöglicht dabei, dass das Polymermaterial die Durchbrüche des Metallgebildes durchdringt und so ein mechanisch hoch belastbarer Verbundwerkstoff mit einer starken Verzahnung zwischen Polymermaterial und Metall entsteht. Am Fußende der Erdwärmesonde ist ein Formteil angeordnet, das mit dem armierten Rohrabschnitt kraftschlüssig und fluiddicht verbunden ist. Die Metallscheibe wird im Endabschnitt des zweiten Rohres geeignet positioniert, so dass es dessen Lumen vollständig verschließt und kann dann bevorzugt mittels eines Radialpressrings gesichert werden, indem dieser von der Außenseite einen Verbindungsabschnitt des zweiten Rohres auf den gesamten Umfang der Metallscheibe dauerhaft aufpresst. Zusätzlich kann vorgesehen sein, den Endabschnitt des zweiten Rohres und ein Sicherungselement, wie einen Radialpressring, mit einem Polymermaterial zu umspritzen. Hierbei wird eine besonders sichere Verbindung zwischen Formteil und Rohr hergestellt, die zudem auch mechanisch hoch belastbar ist. Im Falle einer Koaxial-Sonde, bei der ein erstes Rohr im Lumen eines zweiten Rohres angeordnet ist, wobei im allgemeinen das zweite Rohr (äußeres Rohr) als Rücklauf dient und das erste Rohr (inneres Rohr) als Vorlauf, ist das Formteil eine Metallscheibe. Beim Einsatz als Direktverdampfersonden kann es vorteilhaft sein, die Rohrinnenwand z. B. wendelförmig zu strukturieren, um deren gleichmäßige Benetzung mit der herabrieselnden Flüssigphase des Wärmeträgers zu bewirken.

Weiterhin ist aus der DE 202005011321 U1 ein koaxiales Doppelrohr zur Aufnahme und Durchleitung von flüssigen und gasförmigen Medien bekannt, bei dem das Außenrohr zumindest an einem seiner Enden mit einem separaten Verschluss-Rohrformstück, das zumindest auf einer Seite mit einer Muffenverbindung ausgestattet ist, gegenüber dem Außenmantel des Innenrohres lösbar gelagert und abgedichtet ist, und bei dem das Verschluss-Rohrformstück bedarfsweise mit zusätzlichen Einrichtungen ausgestattet werden kann. Im Einzelnen weist das Verschluss-Rohrformstück zusätzliche Einrichtungen in Form von Anschlüssen für die unterschiedlichsten Zwecke auf, die durch den radialen Gehäusemantel des Verschluss-Rohrformstückes in den mit dem Innenrohr gebildeten Ringspalt eingebunden werden. Zumindest ein Anschluss ist in den radialen Gehäusemantel des Verschluss-Rohrformstückes so eingebunden, dass durch diesen Anschluss ein Medium im Prinzip tangential in den Ringspalt einströmen oder ausströmen kann. Weiterhin dient zumindest ein Anschluss für den Anschluss flüssiger Medien oder für Druckluft oder für Vakuum oder zur Entleerung. In der Ausgestaltung des Doppelrohrs als Wärmeübertrager, insbesondere als Erdwärmesonde, ist ein Anschluss für ein Wärmeträgermedium vorgesehen. Um eine drehende Mantelströmung über die Sondenlänge zu unterstützen und sicher zu stellen, kann in den Ringspalt zwischen dem Innenrohr und dem Außenrohr ein wendelförmiger Drallkörper, z.B. in Form einer vorgespannten Feder, eingesetzt werden. Zudem kann neben der vorteilhaften tangentialen Einströmung das Innenrohr, zumindest dessen Außenmantel, und zwar dort, wo es im Außenrohr verläuft, gewellt, gerippt bzw. entsprechend profiliert sein, um die Strömung des Wärmeträgermediums speziell im Ringspalt für den Wärmetausch weiter positiv zu konditionieren. Bei der Ausgestaltung als Erdwärmesonde wird das Doppelrohr nur einseitig mit einem Verschlussformstück verschlossen, weil es - verfahrensbedingt - auch nur von einer Seite ähnlich einem U-Rohr-Wärmeübertrager betrieben werden kann, jedoch als koaxiales Doppelrohr ausgeführt ist. Auch zirkulieren in diesem Wärmeübertrager keine zwei getrennten Medien, zwischen denen der Wärmetausch über die Innenrohrwandung erfolgt, sondern es zirkuliert im Wärmeübertrager nur ein und das selbe Medium, das über das Außenrohr einen Wärmetausch mit dem angrenzenden Medium Erdreich herstellt. Der Anschluss kann je nachdem, in welcher Weise die Erdwärmesonde betrieben wird zum Einströmen oder Ausströmen des Wärmeträgermediums verwendet werden. Jedoch um die drehende Mantelströmung im Ringspalt am effektivsten zu bewirken, wird eine einströmende Funktion bevorzugt.

Um eine Erdwärmesonde zu schaffen, die ausreichend biegeelastisch und somit einfach in das Bohrloch einzubringen ist, die thermodynamisch einen hohen Wirkungsgrad erzielt und mit reduziertem hydraulischem Verlust arbeitet, ist es aus der DE 20 2007 006 682 U1 bekannt, dass ein Innenrohr mittels längs verlaufender Abstandshalter in einem Außenrohr lose über die gesamte Länge zentrisch positioniert und längs verschiebbar angeordnet ist, wobei Innenrohr, Außenrohr und Abstandshalter aus Kunststoff bestehen. In einer ersten Variante sind die Abstandshalter außen am Innenrohr angeformt, wobei die Höhe der Abstandshalter nach dem Einschieben in das Außenrohr ein gewisses Spiel zu diesem aufweisen, um zu gewährleisten, dass das Innenrohr lose im Außenrohr liegt. Damit wird gewährleistet, dass beim Einbringen des Innenrohres in das Außenrohr keine besonderen Reibungskräfte überwunden werden müssen. Außerdem kann die Erdwärmesonde durch eine solche Konstruktion besonders leicht gebogen werden, weil die dabei auftretende Relativbewegung zwischen Außen- und Innenrohr nicht behindert wird. In einer zweiten Variante ist das Innenrohr außen mit Längsnuten zur Aufnahme von Abstandshaltern versehen, derart, dass die Abstandshalter radial vom Innenrohr abstehen. Die Längsnuten weisen einen schwalbenschwanzähnlichen Querschnitt auf (was beim Extrudieren mit einem passenden Werkzeug einfach möglich ist) oder sind anderweitig hinterschnitten, so dass die mit Rastkanten ausgestatteten Abstandshalter hinreichend sicher eingerastet werden können. Die Abstandshalter werden dann einfach separat extrudiert und mit Rastkanten versehen und anschließend in die Längsnuten eingesetzt. Damit können die Innenrohre vormontiert werden und dann zum Einsatzort gebracht werden, weil die Abstandshalter in den Längsnuten sicher gehalten werden. Alternativ ist das Außenrohr auf der Innenseite mit angeformten Abstandshaltern ausgestattet, die ebenfalls radial ausgerichtet sind, wobei die Abstandshalter aus einem Material mit einem größeren Wärmeübergangswiderstand bestehen als das Außenrohr. Um einen besonders guten Wirkungsgrad der Erdwärmesonde zu erreichen, ist das Innenrohr aus einem Material mit einem größeren Wärmeübergangswiderstand gefertigt als das Außenrohr, welches einen guten Wärmekontakt zur Umgebung aufweisen sollte. Insbesondere ist vorgesehen, das Innenrohr auf seiner Außenseite mit einer Wärmedämmung zu beschichten. Die Herstellung dieser Wämedämmung ist durch den zweiteiligen Aufbau der Erdwärmesonde besonders einfach, da die Wämedämmung nachträglich nach dem Extrudieren des Innenrohres durch Aufsprühen eines Isoliermateriales oder auch gleichzeitig beim Extrudieren aufgebracht werden kann.

In Weiterbildung hierzu ist aus der EP 2 113 728 A1 eine Sonde für die Erdwärmegewinnung mit einem Sondenkopf, bestehend aus einem Oberteil und einem Unterteil, bekannt, wobei der Sondenkopf eine fluidische Verbindung zwischen einem Vorlauf und zumindest zwei Rückläufen bereitstellt. Zwecks Erhöhung des Wirkungsgrades der Erdwärmesonde besitzt diese in einer vorteilhaften Ausführungsform neben einem zentralen Vorlauf vier äquidistant um diesen angeordnete Rückläufe, welche wiederum zueinander gleich beabstandet sind. Zur Erzielung möglichst turbulenter Strömung des Erdsondenmediums weist die Sonde darüber hinaus in einem von Sondenoberteil und -unterteil gebildeten Hohlraum eine Anformung auf, welche derart gewählt ist, dass das durch den Vorlauf in den Hohlraum eintretende Medium den Hohlraum darüber hinaus möglichst homogen durchdringt und im Folgenden ebenfalls zu gleichen Anteilen über die bereitgestellten Rückläufe abfließt. Die Unterdrückung von laminarer Strömung im Erdwärmesondeninneren wird dadurch erreicht, dass der von Oberteil und Unterteil des Sondenkopfs gebildete Hohlraum auf seiner Berandung eine Anformung aufweist, welche derart ausgeformt und angeordnet ist, dass ein im Betrieb der Erdwärmesonde durch den Vorlauf eintretender Fluidstrom möglichst zentral auf die Anformung trifft. Zweckmäßigerweise ist die Anformung dazu im Wesentlichen konvex ausgeprägt und an einer Stelle angeordnet, wo sie unmittelbar dem eintretenden Fluidstrom ausgesetzt ist. Dies kann am einfachsten dadurch erreicht werden, dass die Anformung direkt unterhalb des Vorlaufanschlusses angeordnet ist, etwa derart, dass die Symmetrieachsen von Vorlauf und Anformung zusammenfallen. Hierzu kann die Anformung im Wesentlichen die Form einer Halbkugel oder eines anderen Kugelsegments oder eines Kegels aufweisen. Weiterhin wird vorgeschlagen, die Berandung des Hohlraums mit einen vorgegebenen Oberflächenrelief bei einer vorgegebenen Rauhigkeit zu versehen, was zusätzlich dazu beiträgt, dass sich ein inhomogenes Fluidstromgeschwindigkeitsprofil im Innern des Hohlraums ausprägt, und damit wird eine Strömung im Zusammenwirken mit der Anformung weitestgehend verhindert.

Schließlich ist aus der EP 0 582 118 A1 ein Erdsondengebilde mit mindestens einer im Wesentlichen aus Kunststoff bestehenden formsteifen Erdsonde für den Einbau in Hohlräume von Fundierungselementen und Bohrlöchern bekannt. Im Einzelnen sind mindestens ein Kopfteil und mindestens ein Bodenteil vorgesehen, wobei das Kopfteil mindestens zwei gerade, parallele Langrohre aufweist und das Bodenteil mit mindestens einem der geraden Rohre durch Schweißung oder Klebung flüssigkeitsdicht verbunden ist. Der Kopfteil und/oder der Bodenteil setzen sich aus zwei Nippeln, vorzugsweise 90°-Nippeln, und einem geraden Nippel oder einem T-förmigen Zwischenrohr zusammen. Insbesondere ist der Kopfteil mehrteilig ausgebildet und besteht z.B. aus einem Rohrfassungselement zum Fassen von mindestens zwei geraden Rohren und einem Deckel mit mindestens einem Rohranschlussnippel, wobei die Teile des Kopfteils miteinander verschweißt oder verklebt sind. Vorzugsweise ist das größere Außenrohr länger als das Innenrohr, wodurch ein Umkehrraum für die Flüssigkeit gebildet wird. Bei einer weiteren Ausgestaltung ist ein Langrohr mit mindestens einer Längstrennwand zu Bildung getrennter Flüssigkeitskanäle vorgesehen, wobei der Langrohrquerschnitt vorzugsweise oval ausgebildet ist. Ein Distanzhalter für ein Erdsondengebilde mit mehreren parallel geschalteten Langrohren ist gekennzeichnet durch ein Distanzhalteorgan mit auf dessen Umfang angeordneten Klammern zur Festhaltung der Langrohre. Der Distanzhalter ist einteilig ausgebildet und die Klammern sind vorzugsweise symmetrisch angeordnet.

Wie die vorstehende Würdigung des Standes der Technik aufzeigt, sind unterschiedlich ausgestaltete Koaxial-Erdwärmesonden bekannt. Jedoch fehlt in der Praxis eine Koaxial-Erdwärmesonde, deren Doppelrohrschlauch endlos vorfertigbar ist, die Lagerung auf Rolle verwirklicht und deren Doppelrohrschlauch vor dem Einbringen in das Erdreich nicht vormontiert, sondern nur auf die gewünschte Länge abgeschnitten werden muss.

Der Erfindung liegt - ausgehend von einer Erdwärmesonde gemäß dem DE 20 2007 006 682 U1 - die Aufgabe zugrunde, eine Koaxial-Erdwärmesonde derart auszugestalten, dass ein Doppelrohrschlauch vor dem Einbringen in das Erdreich nicht vormontiert, sondern nur auf die gewünschte Länge abgeschnitten werden muss, dass ein verbesserter Wirkungsgrad der Erdwärmesonde erreicht wird und dass diese endlos vorfertigbar ist.

Diese Aufgabe wird bei einer Koaxial-Erdwärmesonde gemäß dem Oberbegriff des Patentanspruchs 1, dadurch gelöst, dass das Innenrohr an das Außenrohr durch Extrudieren von Kunststoff angeformt und biegeelastisch sind, dass das Innenrohr sich über die gesamte Länge innerhalb des Außenrohrs erstreckt und dass die Querschnittsflächen von Innenrohr zu Außenrohr im Verhältnis von 1:8 bis 1:12 liegen, wobei der in endloser Vorfertigung vorgefertigte Doppelrohrschlauch, bestehend aus dem Innenrohr mit einer angeformten Helix, welches an das Außenrohr angeformt ist, erst vor Einbringen in das Erdreich auf die erforderliche Länge zugeschnitten und mit dem Verschluss versehen werden kann.

Weiterhin wird diese Aufgabe durch ein Verfahren zur Herstellung einer Koaxial-Erdwärmesonde nach Anspruch 1, gemäß Patentanspruch 7, gelöst, dass das Innenrohr mit angeformter Helix aus geschlossenzelligem schaumförmigem Elastomer oder weitgehend geschlossenporigem und elastischem Schaumstoff mit verdichteter oder geschlossener Oberfläche als thermische Isolierung vorgefertigt wird und dass im nachfolgenden Prozessschritt beim Extrudieren des Außenrohrs das Innenrohr eingelegt wird und der derart in endloser Vorfertigung vorgefertigte biegeelastische Doppelrohrschlauch erst vor Einbringen in das Erdreich auf die erforderliche Länge zugeschnitten und mit einem Verschluss versehen wird.

Die erfindungsgemäße Koaxial-Erdwärmesonde weist durch die Kombination aus baulicher Konstruktion von Außen- und konzentrischem Innenrohr (Doppelrohrschlauch) bei verbesserten Strömungsgeschwindigkeiten einen verbesserten Wirkungsgrad der Erdwärmesonde auf. Wie umfangreiche Versuche aufgezeigt haben, wird im Innenrohr eine fast 10-fache Strömungsgeschwindigkeit gegenüber der Strömung im Ringraum zwischen dem Außenrohr und dem Innenrohr erreicht, wodurch der Energieverlust entscheidend verringert wird und die Gesamtlänge der erfindungsgemäßen Koaxial-Erdwärmesonde verkürzt werden kann. Zudem ist das vorgefertigte Innenrohr aus einem schlechten Wärmeleiter hergestellt, so dass diese Isolierung die Energieeffizienz weiter verbessert. Infolge der überraschend einfachen Aufbau- und Montagetechnik wird ein wirtschaftlich effizientes und robustes Produkt gewährleistet.

In Weiterbildung der Erfindung erstreckt sich, gemäß Patentanspruch 3, das Innenrohr konzentrisch über die gesamte Länge des Außenrohrs und die am Innenrohr angeformte Helix windet sich mit konstanter Steigung um den Mantel des Innenrohrs in Richtung der Corioliskraft.

Diese Weiterbildung der Erfindung weist den Vorteil auf, dass das durch den Ringraum zum Sondenkopf fließende Wasser beim Zulauf eine Rotation im Gegenuhrzeigersinn erfährt und diese im Doppelrohrschlauch beibehalten wird (was der (schwachen linksdrehenden) Rotation des strömenden Wassers auf der Nordhalbkugel gemäß der Corioliskraft entspricht), so dass die Strömungsgeschwindigkeit herabsetzende Störungen weitgehend verringert werden.

Weitere Vorteile und Einzelheiten lassen sich der nachfolgenden Beschreibung von bevorzugten Ausführungsformen der Erfindung unter Bezugnahme auf die Zeichnungen entnehmen. In der Zeichnung zeigt:
- Fig. 1: eine Seitenansicht der erfindungsgemäßen Koaxial-Erdwärmesonde mit der Schnittlinie A-A,
- Fig. 2: die Koaxial-Erdwärmesonde nach Fig. 1 im Schnitt,
- Fig. 3: in Draufsicht die Koaxial-Erdwärmesonde nach Fig. 1,
- Fig. 4: eine Ausgestaltung des erfindungsgemäßen Doppelrohrschlauchs im Schnitt B-B,
- Fig. 5: eine Seitenansicht des Doppelrohrschlauchs nach Fig. 4 im Schnitt B-B,

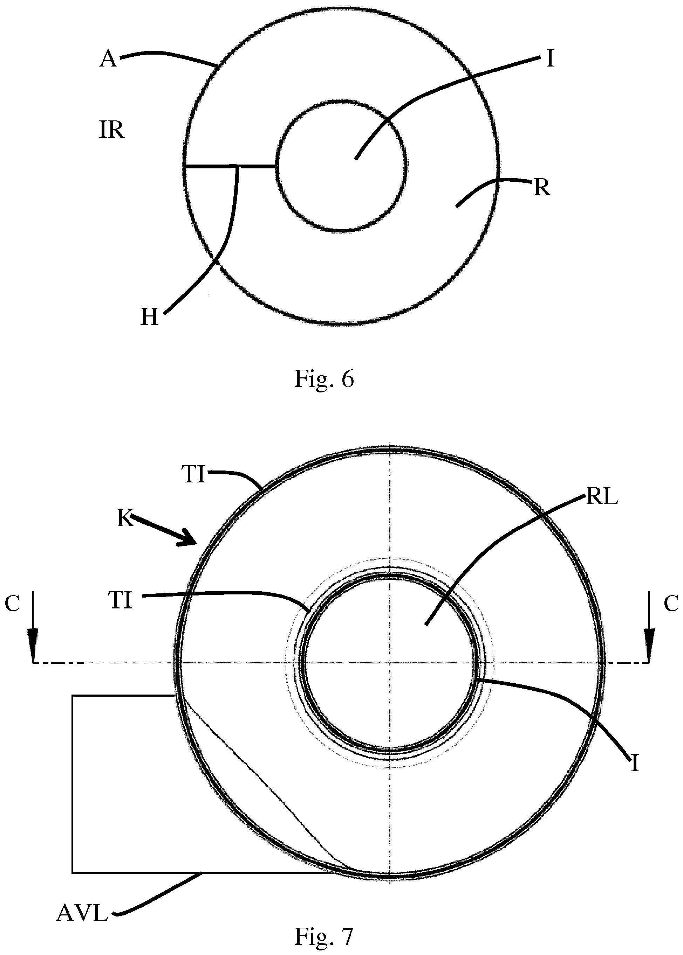

- Fig. 6: in Draufsicht den Doppelrohrschlauch nach Fig. 4,
- Fig. 7: in Draufsicht eine Ausgestaltung des erfindungsgemäßen Anschlusskopfs und der Schnittlinie C-C,
- Fig. 8: den Anschlusskopf nach Fig. 7 im Schnitt,
- Fig. 9: in Seitenansicht den Anschlusskopf nach Fig. 7,
- Fig. 10: in Draufsicht eine Ausgestaltung des erfindungsgemäßen Verschluss und der Schnittlinie D-D,
- Fig. 11: den Verschluss nach Fig. 10 im Schnitt und

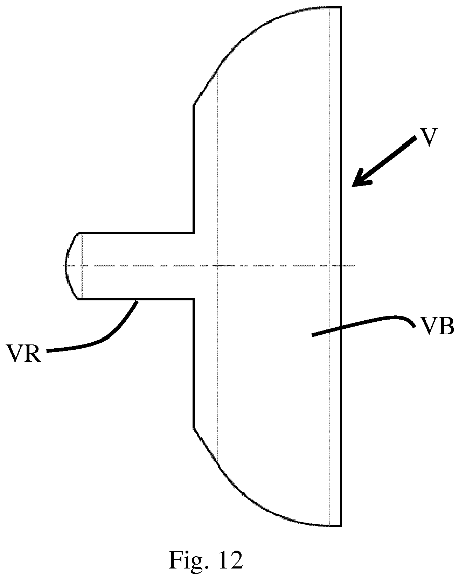

- Fig. 12: in Seitenansicht den Verschluss nach Fig. 10.

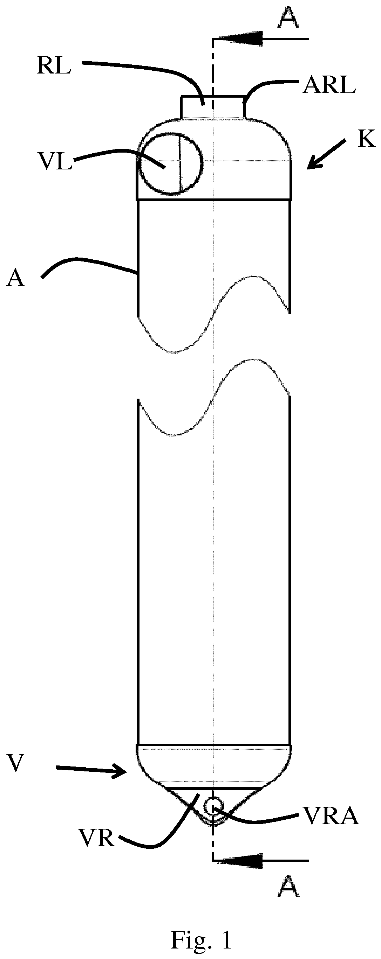

Fig. 1 bis Fig. 3 zeigen eine Ausgestaltung der erfindungsgemäßen Koaxial-Erdwärmesonde in Seitenansicht, im Schnitt und in Draufsicht. Die Koaxial-Erdwärmesonde, besteht erfindungsgemäß aus einem Doppelrohrschlauch mit einem Außen- und einem Innenrohr A, I, wobei das Innenrohr I an das Außenrohr A durch Extrudieren von Kunststoff angeformt und diese Rohre I, A biegeelastisch sind. Das Innenrohr I erstreckt sich über die gesamte Länge innerhalb des Außenrohrs A und die Querschnittsflächen von Innenrohr I zu Außenrohr A liegen im Verhältnis von1:6 bis 1:14, vorzugsweise zwischen 1:8 bis 1:12. Die angeformte Verbindung im Innenrohr I verläuft geradlinig oder wendelförmig in Längsachsrichtung der Koaxial-Erdwärmesonde. Vorzugsweise erstreckt sich das Innenrohr I konzentrisch über die gesamte Länge des Außenrohrs A. Die am Innenrohr I angeformte Helix H windet sich mit konstanter Steigung (vorzugsweise ein Gang auf 1,5m bis 2,5 m, insbesondere 2m bei einem Durchmesser des Außenrohrs A von 6 cm und einem Durchmesser des Innenrohr I von 2cm) um den Mantel des Innenrohrs I in Richtung der Corioliskraft.

Insbesondere weist auf dem dem Sondenkopf gegenüberliegenden Ende einen Anschlusskopf K mit einen becherförmigen Einlauftrichter KE und mit einem seitlich an der Trichterwand angeordneten Anschlussstutzen AVL für die Vorlaufleitung VL auf. Weiterhin ist ein im Wesentlichen zentrisch im Einlauftrichter KE angeordneter und sich durch den Boden des Einlauftrichters KE erstreckender Anschlussstutzen ARL für den Anschluss der Rücklaufleitung RL vorgesehen.

Zwischen dem Außenrohr A und dem Innenrohr I wird ein Ringraum R ausgebildet und dieser zusammen mit dem Innenraum IR des Innenrohrs I bilden Leitungen für ein Wärmeträgermedium W. Vorzugsweise ist ein Verschluss V des Außenrohres A am Sondenkopf becherförmig ausgestaltet und auf der Außenseite- oder Außen- und Innenseite des Becherbodens VB ist eine konvex sich erhebende Verstärkungsrippe VR vorgesehen. Das Innenrohr I endet vor der Wandung des Verschlusses V. Weiterhin weist die außenliegende Verstärkungsrippe VR eine Ausnehmung VRA zum Befestigen eines Gewichts auf. Durch das Gewicht wird die erfindungsgemäße Koaxial-Erdwärmesonde im Bohrloch nach unten gezogen.

Beim erfindungsgemäßen Verfahren wird das Innenrohr I mit angeformter Helix H aus geschlossenzelligem schaumförmigem Elastomer oder weitgehend geschlossenporigem und elastischem Schaumstoff mit verdichteter oder geschlossener Oberfläche vorgefertigt, wodurch über die gesamte Länge des erfindungsgemäßen Doppelrohrschlauchs eine thermische Isolierung TI gegenüber dem Ringraum R der Koaxial-Erdwärmesonde realisiert wird. Im nachfolgenden Prozessschritt wird aus dem so vorgefertigten Innenrohr I mit angeformter Helix H der Doppelrohrschlauch durch Extrudieren hergestellt. Beim Extrudieren (Strangpressen) wird das zu extrudierende Material, das z.B. als Feststoff in Form von Granulat oder Pulver vorliegt, über einen Trichter eingespeist, gegebenenfalls aufgeschmolzen (bei Thermoplasten) und kontinuierlich aus einer Druckkammer durch eine profilierte Öffnung (Düse, Matrize, Mundstück) gepresst, die Form und Querschnitt bestimmt, wobei durch Seitenbeschickung das vorgefertigte Innenrohr I zur Ummantelung mit dem Außenrohr A eingebracht wird.

Auch kann das Innenrohr I einschließlich angeformter Verbindung aus einem Kunststoffmaterial mit höherem Wärmeübergangswiderstand als das Außenrohr A gefertigt werden.

Vorzugsweise werden der Anschlusskopf K und der becherförmige Verschluss V an der Stirnseite mit dem Außenrohr A verschweißt oder heiß verschraubt.

Die erfindungsgemäße Koaxial-Erdwärmesonde weist infolge der überraschend einfachen Aufbau- und Montagetechnik die Vorteile der Herstellung eines wirtschaftlich effizientes und robusten Produkts auf, welches auf Rolle gelagert und einfach als Rollenware zum Einbauort transportiert werden kann. Am Einsatzort kann am bereits mit einem Verschluss V versehenen Doppelrohrschlauch vor dem Einführen in das Bohrloch noch ein Gewicht am Verschluss V befestigt werden.

Die Erfindung ist bislang auch nicht auf die in den Patentansprüchen 1 und 7 definierten Merkmalskombinationen beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal der Patentansprüche 1 und 7 weggelassen bzw. durch mindestens ein an anderer Stelle der Anmeldung offenbartes Einzelmerkmal ersetzt werden kann.

### Bezugszeichenliste:

- A: Außenrohr
- AVL: Anschlussstutzen (Vorlaufleitung)
- ARL: Anschlussstutzen (Rücklaufleitung)
- H: Helix
- I: Innenrohr
- IR: Innenraum
- K: Anschlusskopf
- KE: becherförmiger Einlauftrichter (Anschlusskopf)
- R: Ringraum
- RL: Rücklaufleitung
- TI: thermische Isolierung
- V: Verschluss
- VB: Becherboden (Verschluss)
- VR: Verstärkungsrippe (Verschluss)
- VRA: Ausnehmung (Verstärkungsrippe)
- VL: Vorlaufleitung
- W: Wärmeträgermedium

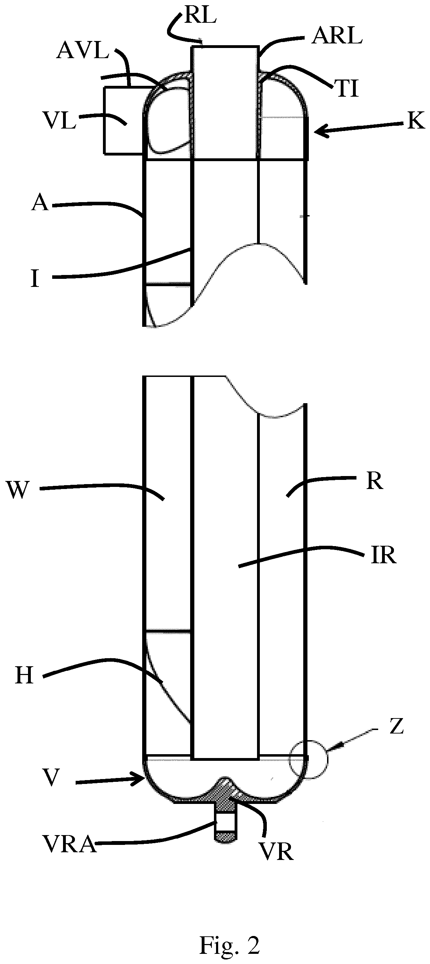

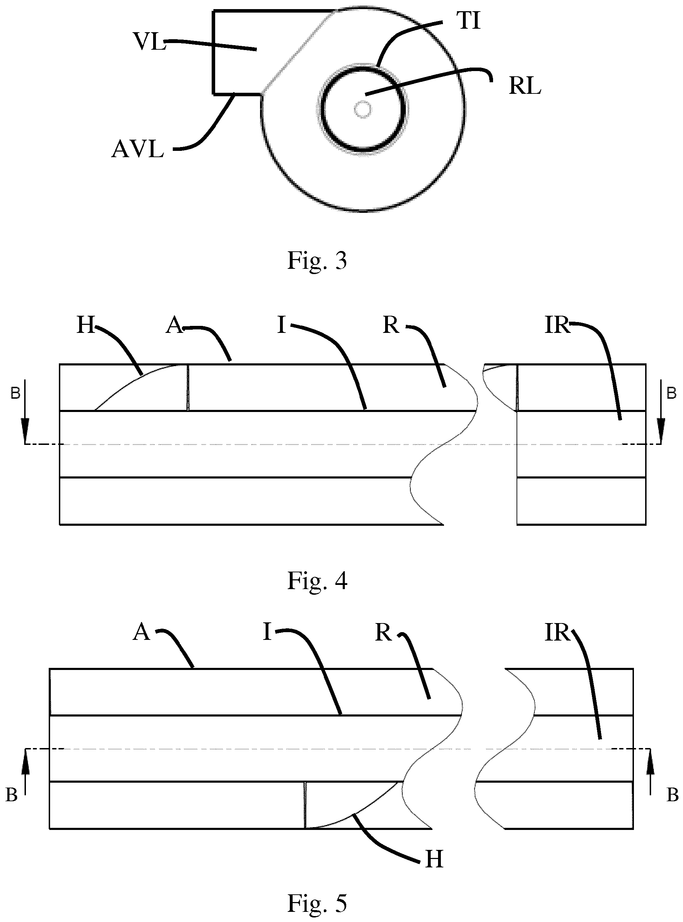

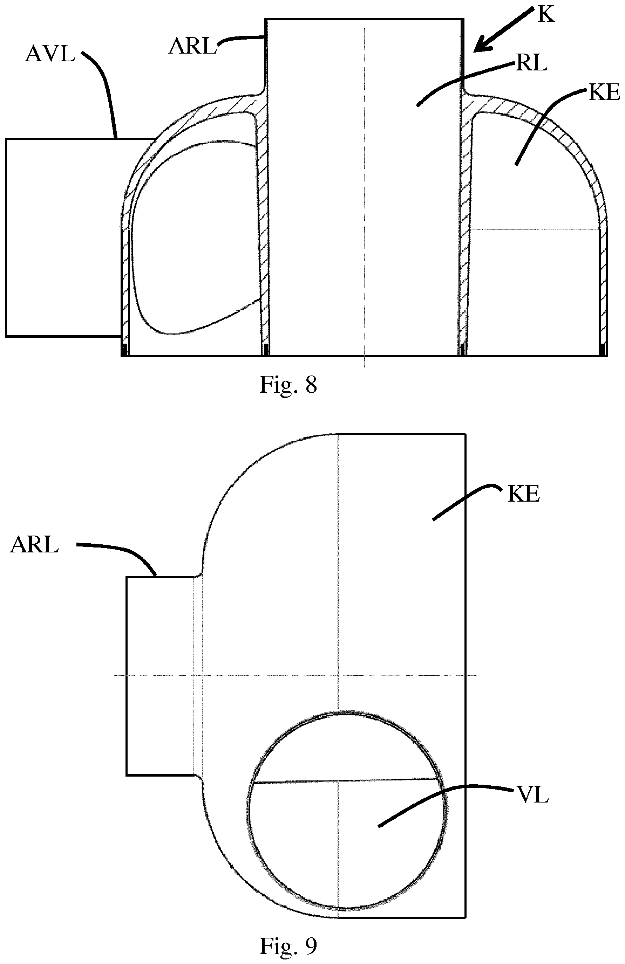

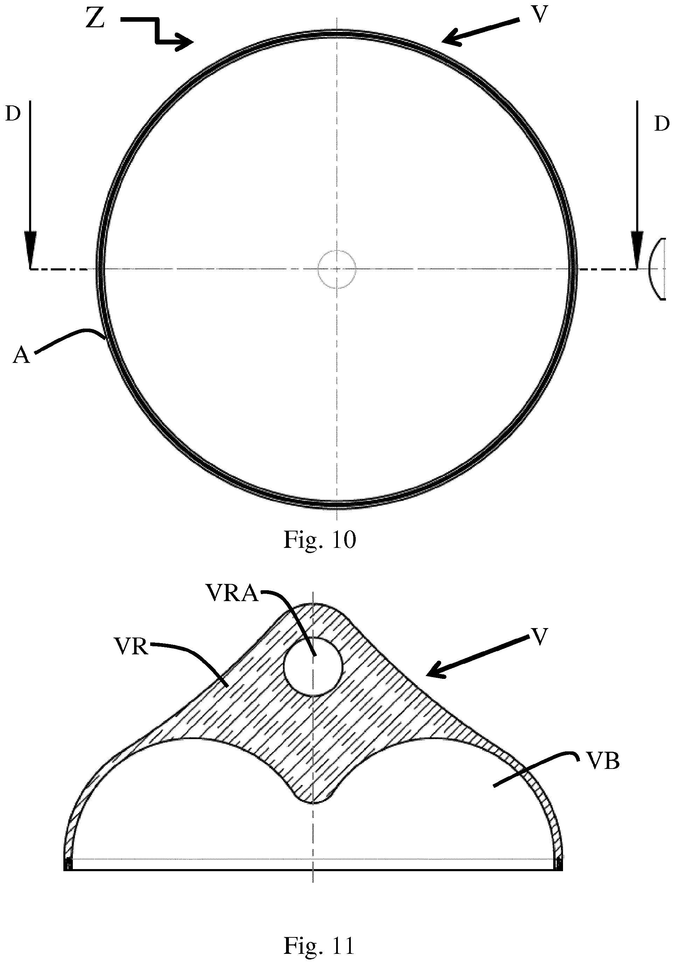

- A-A: Schnittlinie (Koaxial-Erdwärmesonde, Fig. 2)
- B-B: Schnittlinie (Doppelrohrschlauch, Fig. 4 und Fig. 5)
- C-C: Schnittlinie (Anschlusskopf, Fig. 8)
- D-D: Schnittlinie (Verschluss, Fig. 11)

## Patentansprüche

1. Koaxial-Erdwärmesonde, bestehend aus einem Außen- und einem Innenrohr (A, I), mit einem Verschluss (V) des Außenrohres (A) an einem Ende, wobei das Innenrohr (I) vor der Wandung des Verschlusses (V) endet und einem Anschlusskopf (K) am anderen Ende, der sowohl das Innenrohr (I) als auch das Außenrohr A) verschließt und der mit Anschlüssen für Vorlauf- und Rücklaufleitungen (VL, RL) versehen ist, wobei ein Ringraum (R) zwischen dem Außenrohr (A) und dem Innenrohr (I) und der Innenraum (IR) des Innenrohrs (I) Leitungen für ein Wärmeträgermedium (W) bilden und das Innenrohr (I) zumindest über einen oberen Abschnitt seiner Längserstreckung mit einer thermische Isolierung (TI) gegenüber dem Ringraum (R) der Koaxial-Erdwärmesonde versehen ist, **dadurch gekennzeichnet, dass** das Innenrohr (I) an das Außenrohr (A) durch Extrudieren von Kunststoff angeformt und biegeelastisch sind, dass das Innenrohr (I) sich über die gesamte Länge innerhalb des Außenrohrs (A) erstreckt und dass die Querschnittsflächen von Innenrohr (I) zu Außenrohr (A) im Verhältnis von 1:8 bis 1:12 liegen, wobei der in endloser Vorfertigung vorgefertigte Doppelrohrschlauch, bestehend aus dem Innenrohr (I) mit einer angeformten Helix (H), welches an das Außenrohr (A) angeformt ist, erst vor Einbringen in das Erdreich auf die erforderliche Länge zugeschnitten und mit dem Verschluss (V) versehen werden kann.

2. Koaxial-Erdwärmesonde nach Anspruch 1, **dadurch gekennzeichnet, dass** die angeformte Verbindung im Innenrohr (I) geradlinig oder wendelförmig in Längsachsrichtung der Koaxial-Erdwärmesonde verläuft.

3. Koaxial-Erdwärmesonde nach Anspruch 1 oder 2, **dadurch gekennzeichnet, dass** das Innenrohr (I) sich konzentrisch über die gesamte Länge des Außenrohrs (A) erstreckt und dass die am Innenrohr (I) angeformte Helix (H) sich mit konstanter Steigung um den Mantel des Innenrohrs (I) in Richtung der Corioliskraft windet.

4. Koaxial-Erdwärmesonde nach einem oder mehreren der Ansprüche 1 bis 3, **dadurch gekennzeichnet, dass** der Anschlusskopf (K) einen becherförmigen Einlauftrichter (KE) mit einem seitlich an der Trichterwand angeordneten Anschlussstutzen (AVL) für die Vorlaufleitung (VL) aufweist und dass ein im Wesentlichen zentrisch im Einlauftrichter (KE) angeordneter und sich durch den Boden des Einlauftrichters (KE) erstreckender Anschlussstutzen (ARL) für den Anschluss der Rücklaufleitung (RL) vorgesehen ist.

5. Koaxial-Erdwärmesonde nach einem oder mehreren der Ansprüche 1 bis 4, **dadurch gekennzeichnet, dass** der Verschluss (V) des Außenrohres (A) am Sondenkopf becherförmig ausgestaltet ist und dass auf der Außenseite- oder Außen- und Innenseite des Becherbodens (VB) eine konvex sich erhebende Verstärkungsrippe (VR) vorgesehen ist.

6. Koaxial-Erdwärmesonde nach Anspruch 5, **dadurch gekennzeichnet, dass** die außenliegende Verstärkungsrippe (VR) eine Ausnehmung (VRA) zum Befestigen eines Gewichts aufweist.

7. Verfahren zur Herstellung einer Koaxial-Erdwärmesonde nach Anspruch 1, **dadurch gekennzeichnet, dass** das Innenrohr (I) mit angeformter Helix (H) aus geschlossenzelligem schaumförmigem Elastomer oder weitgehend geschlossenporigem und elastischem Schaumstoff mit verdichteter oder geschlossener Oberfläche als thermische Isolierung (TI) vorgefertigt wird und dass im nachfolgenden Prozessschritt beim Extrudieren des Außenrohrs (A) das Innenrohr (I) eingelegt wird und der derart in endloser Vorfertigung vorgefertigte biegeelastische Doppelrohrschlauch erst vor Einbringen in das Erdreich auf die erforderliche Länge zugeschnitten und mit einem Verschluss (V) versehen wird.

8. Verfahren zur Herstellung einer Koaxial-Erdwärmesonde nach Anspruch 7, **dadurch gekennzeichnet, dass** das Innenrohr (I) einschließlich angeformter Verbindung aus einem Kunststoffmaterial mit höherem Wärmeübergangswiderstand als das Außenrohr (A) gefertigt ist.

9. Verfahren zur Herstellung einer Koaxial-Erdwärmesonde mit einen becherförmigen Einlauftrichter (KE) und mit einem im Wesentlichen zentrisch im Einlauftrichter (KE) angeordneten Stutzen (KS) nach Anspruch 7, **dadurch gekennzeichnet, dass** der Anschlusskopf (K) an der Stirnseite mit dem Außenrohr (A) verschweißt oder heiß verschraubt wird.

10. Verfahren zur Herstellung einer Koaxial-Erdwärmesonde mit einem becherförmigen Verschluss (V) nach Anspruch 7, **dadurch gekennzeichnet, dass** der becherförmige Verschluss (V) an der Stirnseite mit dem Außenrohr (A) verschweißt oder heiß verschraubt wird.

11. Verfahren zur Herstellung einer Koaxial-Erdwärmesonde nach einem oder mehreren der Ansprüche 7 bis 10, **dadurch gekennzeichnet, dass** am Einsatzort am bereits mit einem Verschluss (V) versehenen Doppelrohrschlauch vor dem Einführen in das Bohrloch ein Gewicht am Verschluss (V) befestigt werden kann.
